# EUROPEAN PATENT APPLICATION

(11) **EP 4 814 719 A1**
(43) Date of publication of application: **30.09.2026**
(21) Application number: 25225730.8
(22) Date of filing: 19.12.2025
(51) Int. Cl.: G06F 9/50, G06N 3/0499

(54) **MEMORY MANAGEMENT METHOD FOR TRAINING TRANSFORMER-BASED MODELS USING MEMORY USAGE PROFILING**

(30) Priority: 28.03.2025 US 202519094663
(71) Applicant: Bytedance Technology Ltd., KY1 - 1205 Grand Cayman Cayman Islands (KY); BEIJING YOUZHUJU NETWORK TECHNOLOGY CO. LTD., Beijing 101299 (CN); Beijing Zitiao Network Technology Co., Ltd., Beijing 100190 (CN)
(72) Inventor: Liu, Tongping, Los Angeles, CA, 90066 (US); Wan, Xin, Chaoyang District, Beijing, 100028 (CN); Yao, Yushi, Chaoyang District, Beijing, 100028 (CN); Chen, Jianjun, Los Angeles, CA, 90066 (US); She, Qi, Chaoyang District, Beijing, 100028 (CN); Xie, Liguang, Los Angeles, CA, 90066 (US); Lin, Caixue, Los Angeles, CA, 90066 (US); Xiang, Wu, Chaoyang District, Beijing, 100028 (CN); Shi, Rui, Chaoyang District, Beijing, 100028 (CN)
(74) Representative: Grünecker Patent- und Rechtsanwälte PartG mbB

(57) **Abstract**

A system for optimizing and performing a model training session performs at least two profiling sessions. Memory allocation calls are intercepted to generate (204) first and second memory usage profile logs generated during two different sessions, respectively, at different batch sizes. The system classifies memory objects identified in the first and second memory usage profile logs as a same-size object or a proportional-size object, processes the classified memory objects to simulate memory usage for various candidate batch sizes, determines (206) an optimal batch size which maximizes memory usage without exceeding an available memory capacity, and generates a memory schedule containing offset assignments for each classified memory object. Then the system performs (210) the training session at the optimal batch size to train the untrained model, using a custom allocator to perform memory allocation in accordance with the memory schedule.

## Description

### BACKGROUND

The rapid development of deep learning models, especially those comprising hundreds of billions of parameters, has led to significant challenges in training such models efficiently. These large-scale models demand substantial computational resources and vast amounts of memory to accommodate model parameters, input data tensors, intermediate activations, and optimizer states during training. The limited memory capacities of advanced GPU (Graphics Processing Unit) hardware often prove insufficient to meet the escalating memory requirements of state-of-the-art deep learning models.

To address these limitations, distributed training systems have been employed, leveraging multiple GPUs across single-node and multi-node environments. While such distributed approaches provide access to increased aggregate memory capacity, they remain vulnerable to out-of-memory (OOM) errors. These errors occur frequently during large-scale training sessions, especially when training configurations involve larger batch sizes intended to maximize throughput. The memory demands of such configurations can exceed the collective memory capacity of even the largest distributed systems, resulting in training interruptions, inefficiencies, and extended training times.

Conventional solutions have sought to reduce GPU memory consumption through various optimization frameworks, most notably the Zero Redundancy Optimizer (ZeRO) framework. ZeRO reduces memory footprint by partitioning model states, such as gradients and optimizer states, across multiple GPUs. However, while these methods have yielded significant improvements, they primarily address memory redundancy rather than the underlying inefficiencies in how memory allocations are managed during training.

Conventional memory allocators used in deep learning frameworks often suffer from inefficiencies, including memory fragmentation and wasted memory capacity due to inefficient memory reuse policies.

### SUMMARY

In view of the above issues, a memory management method is provided for training an untrained transformer-based model using memory usage profiling. The memory management method comprises performing at least two deep learning memory usage profiling sessions, each using a different batch size, for training the untrained model, and generating a first memory usage profile log during a first memory usage profiling session and a second memory usage profile log during a second memory usage profiling session. The method further includes determining an optimal batch size based on the first memory usage profile log and the second memory usage profile log, and generating a memory schedule in accordance with the optimal batch size. The method further includes performing a deep learning model training session at the optimal batch size to train the untrained model, performing custom memory allocation in accordance with the memory schedule, and generating and outputting a trained model.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 illustrates a schematic view of a computing system according to an example of the present disclosure.
Fig. 2 illustrates a schematic view of the first and second memory usage profile logs in the example of Fig. 1.
Fig. 3 illustrates a detailed schematic view of the inputs and outputs of the custom allocator of the computing system of Fig. 1.
Fig. 4 illustrates a flowchart of a first method for training an untrained transformer-based model using memory usage profiling according to an example embodiment of the present disclosure.
Fig. 5 is a flowchart of a second method for training an untrained transformer-based model using memory usage profiling according to an example embodiment of the present disclosure.
Fig. 6 is a flowchart of a third method for processing classified memory objects to simulate memory usage for various candidate batch sizes, determining an optimal batch size, and determining offset assignments of each classified memory object as described with reference to the second example method of Fig. 5.
Fig. 7 is a table illustrating experimental data comparing the training performance with and without the implementation of the custom allocator of the present disclosure across various hardware configurations for training a deep learning model.
Fig. 8 shows an example computing environment of the present disclosure.

### DETAILED DESCRIPTION

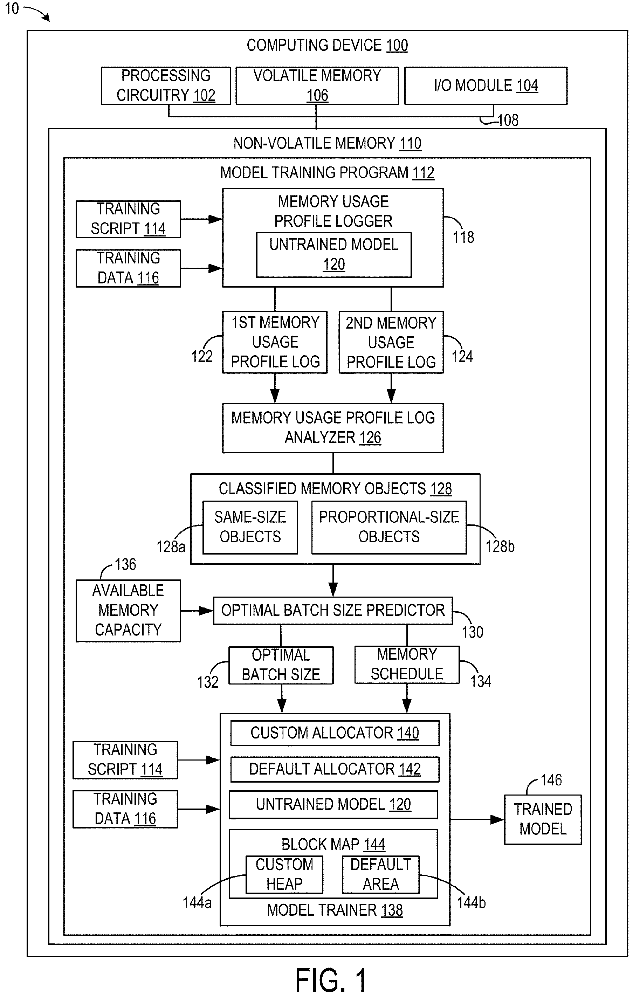

Referring to Fig. 1, a training computing system 10 for generating a trained machine learning model 146 is provided. The training computing system 10 comprises a computing device 100 including processing circuitry 102, an input/output module 104, volatile memory 106, and non-volatile memory 110 storing a model training program 112. A bus 108 may operatively couple the processing circuitry 102, the input/output module 104, and the volatile memory 106 to the non-volatile memory 110. Although the model training program 112 is depicted as hosted at one computing device 100, it will be appreciated that the model training program 112 may alternatively be hosted across a plurality of computing devices to which the computing device 100 may be communicatively coupled via a network.

The processing circuitry 102 is configured to store the model training program 112 in non-volatile memory 110 that retains instructions stored data even in the absence of externally applied power, such as FLASH memory, a hard disk, read only memory (ROM), electrically erasable programmable memory (EEPROM), etc. The instructions include one or more programs, including the model training program 112, and data used by such programs sufficient to perform the operations described herein. In response to execution by the processing circuitry 102, the instructions cause the processing circuitry 102 to execute the model training program 112.

The processing circuitry 102 is a microprocessor that includes one or more of a central processing unit (CPU), a GPU, an application specific integrated circuit (ASIC), a system on chip (SOC), a field-programmable gate array (FPGA), a logic circuit, or other suitable type of microprocessor configured to perform the functions recited herein. Volatile memory 106 can include physical devices such as random access memory (RAM), static random access memory (SRAM), dynamic random access memory (DRAM), etc., which temporarily stores data only for so long as power is applied during execution of programs. Non-volatile memory 110 can include physical devices that are removable and/or built in, such as optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology.

The model training program 112 implements a memory usage profile logger 118 configured to perform memory usage profiling for a deep learning model training session for training an untrained model 120. A training script 114 and training data 116 are inputted into the memory usage profile logger 118 to perform at least two deep learning memory usage profiling sessions, each using a different batch size, for training the untrained model 120. The training script 114 may define a model architecture of the untrained model 120, the training algorithm, and training hyperparameters. The model architecture of the untrained model 120 may be transformer-based.

Responsive to receiving input of the training script 114 and the training data 116, the memory usage profile logger 118 intercepts and logs memory allocation calls during the memory usage profiling session. The memory allocation calls may be generated when GPU operations that run on CUDA (Compute Unified Device Architecture) streams are executed during the execution of the training script 114. Such GPU operations may include the creation of tensors on a GPU, the transfer of model parameters to GPU memory, the computation of gradients, or the loading of data batches into GPU memory, for example. The memory allocation calls may be logged by tracking memory allocation traces. The computational environment of the model training session is not particularly limited. For example, memory usage profile logging may be performed in a high-performance computing cluster or a dedicated machine learning workstation. Computing clusters may be implemented as cloud-based services or local multi-GPU workstations.

The memory usage profile logger 118 generates two sets of memory logs by performing two memory usage profiling sessions with different batch sizes: a first memory usage profile log 122 generated during a first memory usage profiling session with a first batch size, and a second memory usage profile log 124 generated during a second memory usage profiling with a second batch size. The second batch size may be twice the size of the first batch size, for example.

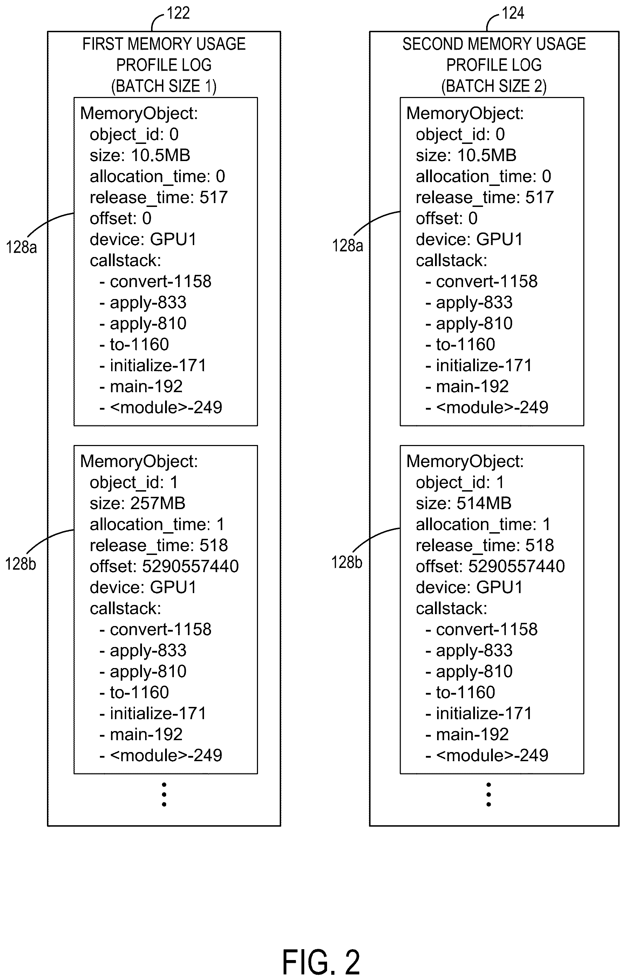

Turning to Fig. 2, one example of the memory objects recorded in the first memory usage profile log 122 and the second memory usage profile log 124 is illustrated. The logs 122, 124 may include timestamps of memory allocations or deallocations (releases), or the exact times when memory was allocated or deallocated (released). The logs 122, 124 may also track which addresses were allocated or deallocated (released), the sizes of each allocation or deallocation (memory release), and offsets of each allocation or deallocation (release) in memory. Further, each log 122, 124 captures the callsite information indicating the corresponding call stack at the moment of memory allocation or deallocation (release), thereby ensuring that allocations triggered by the training algorithm can be traced back to the source.

To make timestamps, a logical clock, or event-based counter may be used. An integer counter may start at zero and increment every time a memory event (allocation or deallocation) occurs. Accordingly, the logical clock may ensure strict event ordering.

To capture a call stack, a pointer to a current execution frame in the code interpreter may be returned. Then the function name of the function currently being executed may be returned, along with the source file name where the function currently being executed is defined. Accordingly, the memory allocations can be traced or mapped to the exact part of the training algorithm in the training script 114. Then the captured call stack may be stored as callsite information in a stack-like data structure in the logs 122, 124.

Returning to Fig. 1, a memory usage profile log analyzer 126 classifies the memory objects identified in the logs 122, 124 as same-size objects or proportional-size objects 128b. Comparing the profiles of each memory object in both memory usage profiling sessions, the analyzer 126 determines whether the allocation size of the memory object remains constant or scales proportionally with the batch size. The analyzer 126 also determines whether the allocation order of the memory object consistently appears in the same order within the sequence of allocations.

When the analyzer 126 determines that the allocation size of the memory object remains constant regardless of the batch size across the two memory usage profiling sessions, and the allocation order in the sequence remains unchanged across the two training sessions, then the memory object is classified as a same-size object 128a. For example, if a memory object is allocated at position 10 in both memory usage profiling sessions and has the same size (for example, 257 MB in both executions), it is classified as a same-size object. Fig. 2 also illustrates a same-size object 128a which has a size of 10.5MB which is unchanged in both memory usage profiling sessions with two different batch sizes.

When the analyzer 126 determines that the allocation size of the memory object scales proportionally with the batch size across the two memory usage profiling sessions, and the allocation order in the sequence remains unchanged across the two memory usage profiling sessions, then the memory object is classified as a proportional-size object 128b. For example, if a memory object is allocated at position 15 at 104 MB for batch size 1, and the memory object is allocated at position 15 at 308 MB for batch size 2, then it is classified as a proportional-size object 128b. Fig. 2 also illustrates a proportional-size object 128b which has a size of 257 MB during the first memory usage profiling session with a batch size of 1, and a size of 514 MB during the second memory usage profiling session with a batch size of 2.

The classified memory objects 128a, 128b are inputted into an optimal batch size predictor 130 to determine and output an optimal batch size 132 corresponding to a memory capacity 136 that is available for the model training program 112. The optimal batch size predictor 130 simulates memory usage for a plurality of candidate batch sizes, determining an optimal batch size 132 that maximizes memory usage without exceeding the available memory capacity 136. Then offset assignments are determined for each classified memory object 128 through a greedy scheduling algorithm to generate a memory schedule 134 containing offset assignments for each classified memory object 128.

To initialize the memory scheduling simulation, the predictor 130 may define a starting value as the initial batch size and optimal batch size. The initial batch size may be set to two, for example. Then, in a loop, the predictor 130 may iterate through the plurality of candidate batch sizes (two, three, four, ... for example). For each candidate batch size, the predictor 130 sorts all the memory objects 128a, 128b in non-increasing order of size, iterates through the classified memory objects to assign offsets for each object, and calculates a predicted total memory usage.

To iterate through the classified memory objects 128a, 128b to assign offsets for each classified memory object, the predictor 130 may scale the sizes of the proportional-size memory objects 128b based on batch size, but keep the same-size memory objects 128a unchanged in size. For example, the sizes of the proportional-size memory objects 128b may be recalculated as base size × candidate batch size / reference batch size. The reference batch size is the batch size of the memory usage profiling session that was performed when the proportional-size memory object 128b was noted to have the base size. Then, using the greedy scheduling algorithm, the predictor 130 may scan previously assigned objects to determine gaps between allocations. The predictor 130 performs checks on the temporal dependencies (allocation and release times) of memory objects and ensures that only non-overlapping memory offsets with no lifetime overlaps are considered. While performing the checks on temporal dependencies, the predictor 130 identifies gaps with sufficient gap sizes for the memory object 128 and no lifetime overlaps as the candidate offsets. After all the candidate offsets are identified, the smallest candidate offset among the candidate offsets is assigned as the offset for the memory object 128. On the other hand, when no candidate offset is found, the memory object 128 is allocated at the end of the custom heap.

The predictor 130 determines whether the predicted total memory usage for the candidate batch size exceeds the available memory capacity 136. When the predictor 130 determines that the predicted total memory usage for the candidate batch size is less than the available memory capacity 136, then the predictor 130 continues to iterate through the plurality of candidate batch sizes, iteratively increasing the candidate batch size by 1, and the memory scheduling simulation may be performed again at the iteratively increased candidate batch size. When the predictor 130 determines that the predicted total memory usage for the candidate batch size exceeds the available memory capacity 136, then the predictor 130 may terminate the loop, and select the last feasible batch size among the plurality of candidate batch sizes as the optimal batch size 132.

Subsequently, the model trainer 138 receives the optimal batch size 132 and memory schedule 134 as input and performs a deep learning model training session at the optimal batch size 132 to generate and output a trained model 146. The model trainer 138 may use the same training script 114 and training data 116 that were used by the memory usage profile logger 118 to generate the first and second memory usage profile logs 122, 124. The model trainer 138 uses a custom allocator 140 and a default allocator 142 to allocate memory in a custom heap 144a or a default area 144b of a block map 144, respectively, during the model training session.

The block map 144 is a data structure which maps memory pointers to metadata about allocated memory blocks, maintaining a comprehensive mapping between memory object pointers and their associated metadata, which may include size, offset, and callsite information. The block map 144 may be stored in volatile memory 106 during runtime, or persisted in non-volatile memory 110 for optimization.

During the model training session, the custom allocator 140 performs custom memory allocation in accordance with the memory schedule 134 by intercepting the memory allocation calls that are generated as the training script 114 is executed by the model trainer 138, and allocates memory for the classified memory objects 128 in accordance with offset assignments indicated in the memory schedule 134.

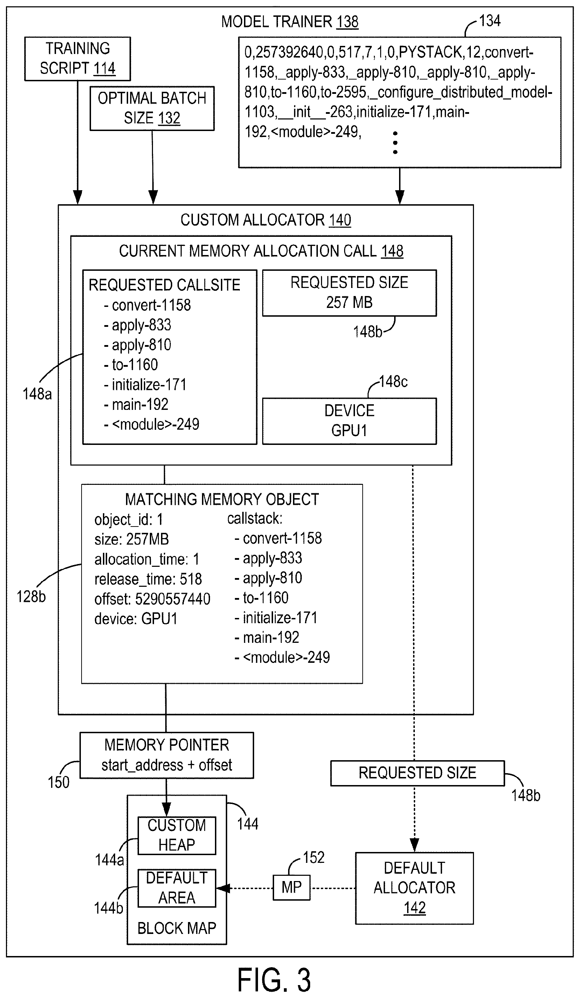

Turning to Fig. 3, the inputs and outputs of the custom allocator 140 of Fig. 1 are illustrated in detail according to one example. In this example, the custom allocator 140 intercepts memory allocation calls during the execution of a training script 114 for training an untrained model. The memory allocation calls may be associated with CUDA streams, or sequences of operations that execute on deep learning hardware in the order that they are issued. For each memory allocation call, the custom allocator 140 queries the classified memory objects 128 in the memory schedule 134 for a match with the current memory allocation call 148, which includes information including the requested callsite information 148a, the requested size 148b, and device identification 148c. For example, the custom allocator 140 may search for a match between the callsite information 148a and the requested size 148b of the current memory allocation call 148 with the callsite information and memory size of same-size objects 128a or proportional-size objects 128b. As shown in Fig. 3, the memory schedule 134 includes the offset assignments, sizes, allocation times, release times and callsite information (including call stack information) of each classified memory object 128. In this example, the first memory object listed in the schedule 134 has an offset assignment of zero, a size of 257392640 bytes, an allocation time of 0, and a release time of 517. The callsite information starts with "PYSTACK, 12..."

When it is determined that the callsite information 148a and requested memory size 148b in the current memory allocation call 148 match a classified object 128b, the custom allocator 140 proceeds to map the classified object 128b in a custom heap 144a of the block map 144 at an offset assignment indicated in the memory schedule 134. In this example, the current memory allocation call 148 includes a requested callsite information 148a and requested size 148b of 257MB. The matching memory object 128b also has the same callsite information as the requested callsite information 148a, and also has the same memory size 257MB as the requested size 148b.

Responsive to determining that the callsite information 148a and requested memory size 148b in the current memory allocation call 148 match a classified object 128b, the custom allocator 140 retrieves the offset from the matching memory object 128b, and returns a memory pointer 150 to start_address + offset (memory region within the custom heap 144a). The matching memory object 128b is then allocated memory at the address specified by the memory pointer 150 in the custom heap 144a of the block map 144.

However, when it is determined that the callsite information 148a and requested memory size 148b in the current memory allocation call 148 do not match a classified object, the default allocator 142 may proceed to return a memory pointer 152 to map a memory object of the current memory allocation call 148 in a default area 144b of the block map 144 outside the custom heap 144a in accordance with the requested size 148b. Accordingly, the number of allocation calls can be reduced by relying on just offset lookup and pointer arithmetic for the allocation of same-size objects 128a and proportional-size objects 128b.

The custom allocator 140 may reuse memory in the custom heap 144a by determining whether dependent memory blocks have been released. Memory reuse is the reallocation of a previously used memory region for new objects after the original object is no longer active. Before returning a memory pointer 150 to map the matching memory object 128b, the custom allocator 140 may use a dependency checking function to determine whether the memory region that is mapped for the classified memory object 128b overlaps with an active memory region of a memory object that is still active. An active memory region may be used by operations of a currently active CUDA event, for example. When the dependency checking function determines that the two memory regions are not dependent, then the custom allocator 140 proceeds to map the matching memory object 128b to the custom heap 144a of the block map 144. When the dependency checking function determines that the two memory regions are dependent or a lifetime overlap exists, then the custom allocator 140 waits until all operations associated with the active memory region are completed before mapping the matching memory object 128b to the custom heap 144a of the block map 144. The dependency checking function may keep track of an event count for each block. The event count may decrement each time a dependent event completes. When the event count of a given block decrements to zero, it is determined that the given block is no longer in use and can be released for reuse.

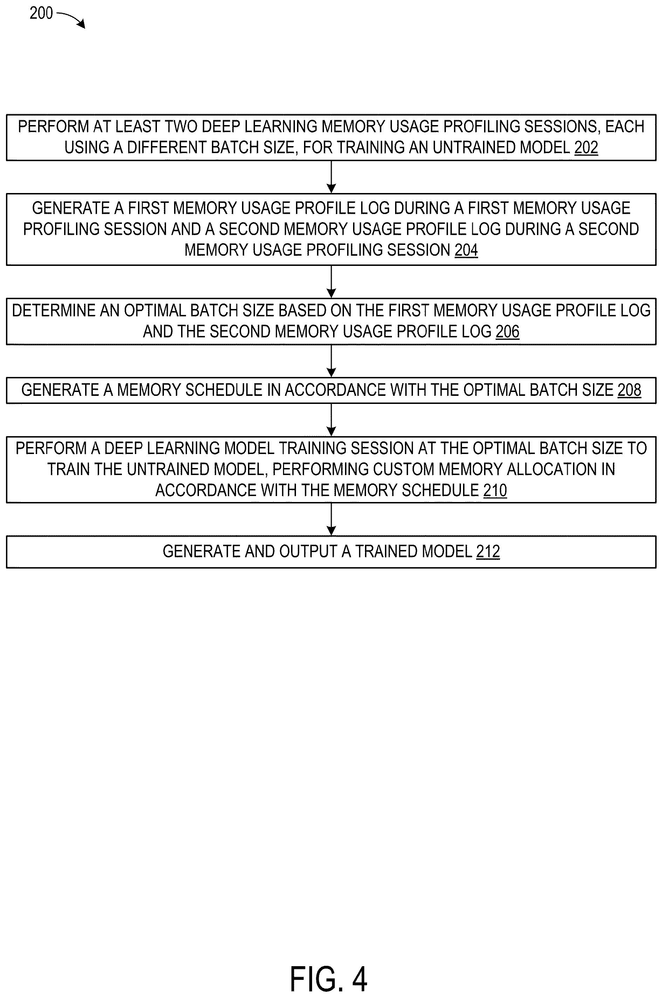

Fig. 4 shows a process flow diagram of a first example memory management method 200 for training an untrained transformer-based model using memory usage profiling. The example method 200 may be executed by the processing circuitry and memory of the training computing system 10 of Fig. 1. The example method 200 includes, at step 202, performing at least two deep learning memory usage profiling sessions, each using a different batch size, for training the untrained model. At step 204, the method 200 includes generating a first memory usage profile log during a first memory usage profiling session and a second memory usage profile log during a second memory usage profiling session. At step 206, the method 200 includes determining an optimal batch size based on the first memory usage profile log and the second memory usage profile log. At step 208, the method 200 includes generating a memory schedule in accordance with the optimal batch size. At step 210, the method 200 includes performing a deep learning model training session at the optimal batch size to train the untrained model, performing custom memory allocation in accordance with the memory schedule. At step 212, the method 200 includes generating and outputting a trained model.

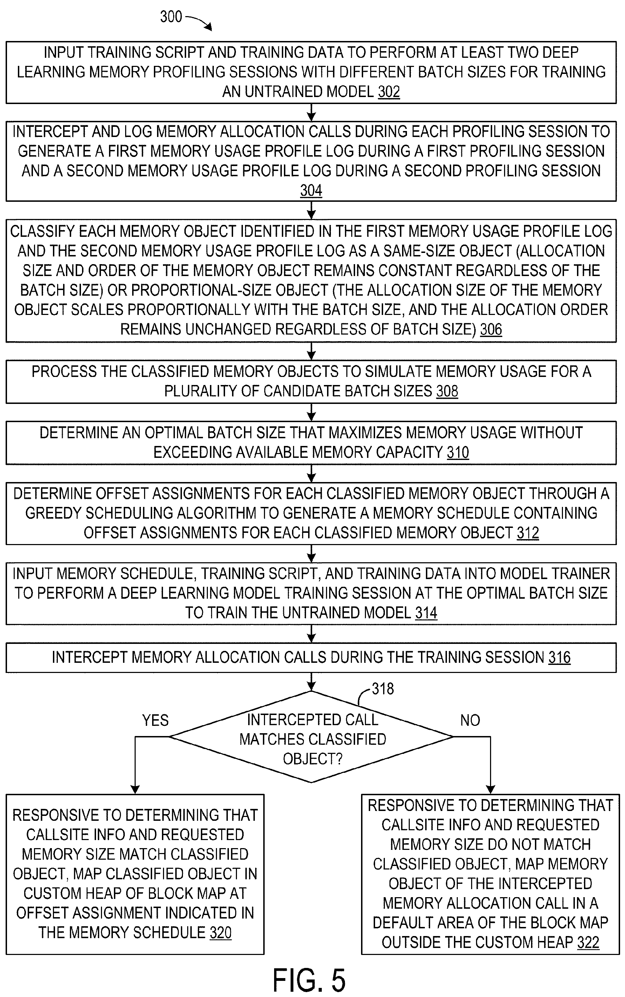

Fig. 5 shows a process flow diagram of a second example memory management method 300 for training an untrained transformer-based model using memory usage profiling. The example method 300 may be executed by the processing circuitry and memory of the training computing system 10 of Fig. 1. The example method 300 includes, at step 302, inputting training script and training data to perform at least two deep learning memory usage profiling sessions, each using a different batch size, for training an untrained model. At step 304, the method 300 includes intercepting and logging memory allocation calls during each memory usage profiling session to generate a first memory usage profile log generated during a first memory usage profiling session and a second memory usage profile log generated during a second memory usage profiling session.

At step 306, the method 300 includes classifying memory objects identified in the first memory usage profile log and the second memory usage profile log as a same-size object (allocation size and order of the memory object remains constant regardless of the batch size) or proportional-size object (the allocation size of the memory object scales proportionally with the batch size, and the allocation order remains unchanged regardless of batch size).

At step 308, the classified memory objects are processed to simulate memory usage for a plurality of candidate batch sizes. At step 310, an optimal batch size that maximizes memory usage without exceeding available memory capacity is determined. At step 312, offset assignments for each classified memory object are determined through a greedy scheduling algorithm to generate a memory schedule containing offset assignments for each classified memory object.

At step 314, the method 300 includes inputting a memory schedule, the training script, and the training data to a model trainer to perform a deep learning model training session at the optimal batch size to train the untrained model. Custom memory allocation is performed in accordance with the memory schedule. The training script and the training data used by the model trainer may be the same as the training script and the training data used to generate the first and second memory usage profile logs.

At step 316, during the training session, memory allocation calls are intercepted. At step 318, it is determined whether the intercepted call matches a classified memory object. At step 320, responsive to determining that callsite information and requested memory size match a classified object, the method 300 proceeds to map the classified object in a custom heap of a block map at an offset assignment indicated in the memory schedule. At step 322, responsive to determining that callsite information and requested memory size do not match a classified object, the method 300 proceeds to map a memory object of the intercepted memory allocation call in a default area of the block map outside the custom heap.

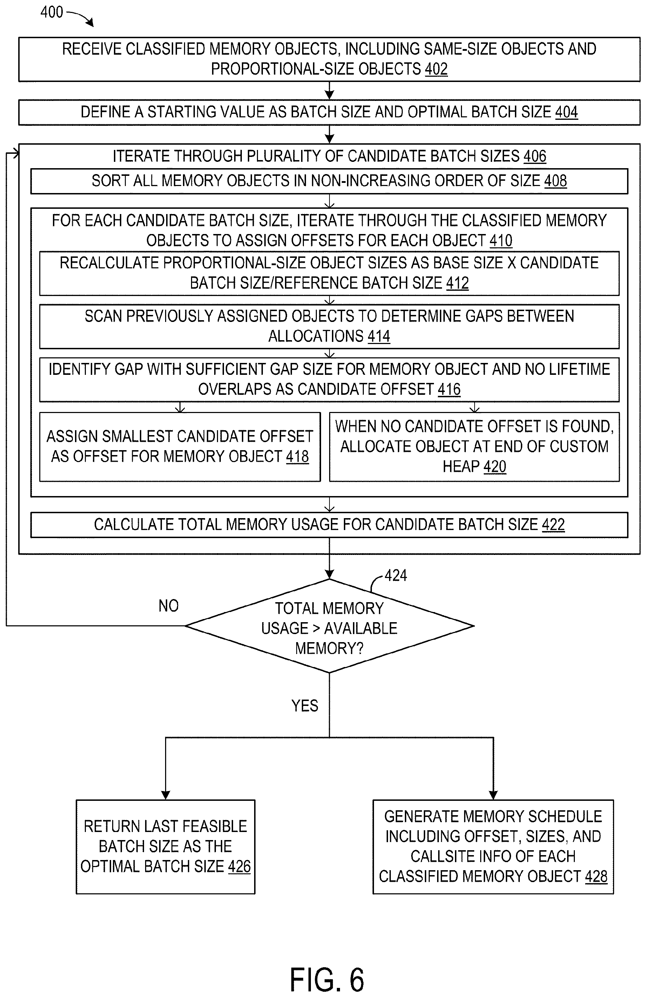

Fig. 6 shows a process flow diagram of a third example method 400 for processing classified memory objects to simulate memory usage for various candidate batch sizes, determining an optimal batch size, and determining offset assignments of each classified memory object as described with reference to steps 308, 310, and 312 in the second example method 300 of Fig. 4. The example method 400 may be executed by the processing circuitry and memory of the training computing system 10 of Fig. 1. The example method 400 includes, at step 402, receiving classified memory objects, including same-size objects and proportional-size objects. At step 404, a starting value is defined as the batch size and optimal batch size.

At step 406, the method 400 starts to iterate through a plurality of candidate batch sizes, starting with the initial batch size defined at step 404. For each candidate batch size that step 406 iterates through, step 408 sorts all memory objects in non-increasing order of size, step 410 iterates through the classified memory objects to assign offsets for each classified memory object, and step 422 calculates the total memory usage for the candidate batch size.

For each classified memory object that step 410 iterates through, step 412 recalculates proportional-size object sizes as base size × candidate batch size/reference batch size, step 414 scans previously assigned objects to determine gaps between allocations, step 416 identifies a gap with sufficient gap size for the classified memory object and no lifetime overlaps as a candidate offset, and step 418 assigns the smallest candidate offset as the offset for the classified memory object. When no candidate offset is found, step 30420 proceeds to allocate the memory object at the end of the custom heap.

At step 424, it is determined whether the total memory usage calculated at step 422 exceeds the available memory. When it is determined that the total calculated memory usage is less than the available memory, step 406 iterates to the next candidate batch size. When it is determined that the total calculated memory usage exceeds the available memory, the method 400 proceeds to step 426 to return the last feasible batch size as the optimal batch size and step 428 to generate a memory schedule including the offset assignments, sizes, and callsite information of each classified memory object.

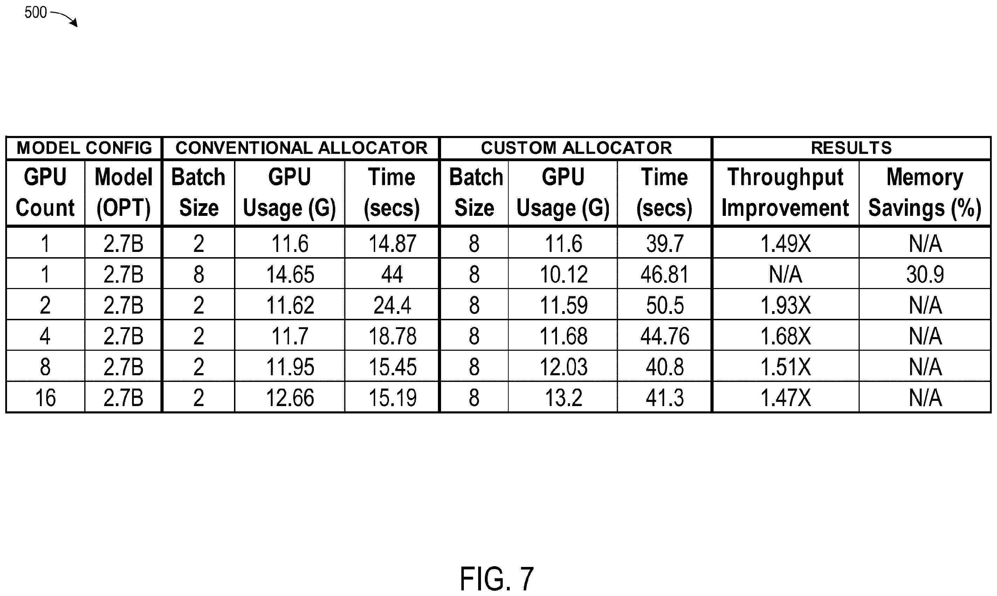

Referring to Fig. 7, a table 500 summarizes experimental data obtained by the present inventors by comparing the training performance with and without the implementation of the custom allocator of the present disclosure across configurations involving 1, 2, 4, 8, and 16 GPUs for training a 2.7 billion parameter model (OPT=2.7B). The key performance indicators include batch size (BS), GPU memory usage (G) in gigabytes, training time, and throughput improvement expressed as a multiplicative factor. In each configuration, the baseline (without using the custom allocator) utilized a batch size of 2 due to GPU memory constraints, while the implementation of the custom allocator of the present disclosure enabled a batch size of 8 without surpassing memory limits, owing to the predictive memory allocation and custom heap management that were implemented in the computing system of the present disclosure.

The table 500 demonstrates that the use of the custom allocator increased batch sizes without substantial increases in GPU memory consumption. For example, in the 1-GPU configuration, the custom allocator enabled a batch size increase from 2 to 8, maintaining GPU memory usage at 11.6G, and achieving a 1.49X improvement in throughput. Similarly, for the 2-GPU configuration, throughput improved by 1.93X, with memory usage remaining unchanged. In larger configurations, such as 8 GPUs, throughput improvements of 1.51X were observed, while in the 16-GPU scenario, a 1.47X improvement was recorded, demonstrating the scalability of the custom allocator across distributed systems.

Furthermore, the table 500 illustrates the memory efficiency achieved by the custom allocator of the present disclosure. In a particular scenario using one GPU, the invention reduced GPU memory consumption from 14.65G to 10.12G, corresponding to a 30.9% memory savings, while maintaining comparable training times. This reduction in memory usage may allow larger workloads per GPU and the reduction of out-of-memory errors, thereby enhancing the overall training throughput and hardware utilization efficiency.

The results presented in the table 500 illustrate how the present disclosure overcomes the inefficiencies of conventional memory allocators by incorporating a predictive batch size adjustment mechanism and a custom memory allocation strategy. Accordingly, not only can hardware utilization be maximized, but training cycles can also be accelerated, thereby optimizing the training of large-scale machine learning models on both single-node and multi-node distributed GPU systems.

As described throughout herein, by implementing a custom allocator enabling the optimal adjustment of batch size and efficient memory scheduling, significant technical benefits are achieved, including enhanced throughput and memory usage of large-scale deep learning model training. Memory fragmentation and wasted memory capacity during training sessions can also be significantly reduced. This enhancement may be particularly important for training models with hundreds of billions of parameters, where hardware limitations present significant challenges.

In some embodiments, the methods and processes described herein may be tied to a computing system of one or more computing devices. In particular, such methods and processes may be implemented as a computer-application program or service, an Application Program Interface (API), a library, and/or other computer-program product. In some embodiments, the methods and processes described herein may be tied to a computing system of one or more computing devices. In particular, such methods and processes may be implemented as a computer-application program or service, an API, a library, and/or other computer-program product.

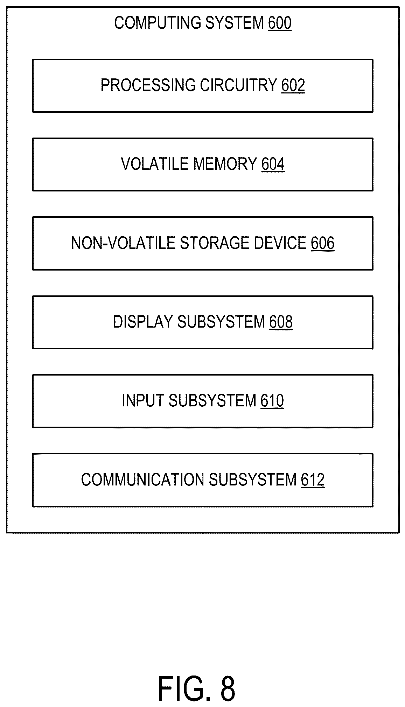

Fig. 8 schematically shows a non-limiting embodiment of a computing system 600 that can enact one or more of the methods and processes described above. Computing system 600 is shown in simplified form. Computing system 600 may embody the training computing system 10 described above and illustrated in Fig. 1. Components of computing system 600 may be included in one or more personal computers, server computers, tablet computers, home-entertainment computers, network computing devices, video game devices, mobile computing devices, mobile communication devices (e.g., smartphone), and/or other computing devices, and wearable computing devices such as smart wristwatches and head mounted augmented reality devices.

Computing system 600 includes processing circuitry 602, volatile memory 604, and a non-volatile storage device 606. Computing system 600 may optionally include a display subsystem 608, input subsystem 610, communication subsystem 612, and/or other components not shown in Fig. 8.

Processing circuitry 602 typically includes one or more logic processors, which are physical devices configured to execute instructions. For example, the logic processors may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the processing circuitry 602 may be single-core or multi-core, and the instructions executed thereon may be configured for sequential, parallel, and/or distributed processing. Individual components of the processing circuitry 602 optionally may be distributed among two or more separate devices, which may be remotely located and/or configured for coordinated processing. For example, aspects of the computing system disclosed herein may be virtualized and executed by remotely accessible, networked computing devices configured in a cloud-computing configuration. In such a case, these virtualized aspects are run on different physical logic processors of various different machines, it will be understood. These different physical logic processors of the different machines will be understood to be collectively encompassed by processing circuitry 602.

Non-volatile storage device 606 includes one or more physical devices configured to hold instructions executable by the processing circuitry 602 to implement the methods and processes described herein. When such methods and processes are implemented, the state of non-volatile storage device 606 may be transformed-e.g., to hold different data.

Non-volatile storage device 606 may include physical devices that are removable and/or built in. Non-volatile storage device 606 may include optical memory, semiconductor memory, and/or magnetic memory, or other mass storage device technology. Non-volatile storage device 606 may include nonvolatile, dynamic, static, read/write, read-only, sequential-access, location-addressable, file-addressable, and/or content-addressable devices. It will be appreciated that non-volatile storage device 606 is configured to hold instructions even when power is cut to the non-volatile storage device 606.

Volatile memory 604 may include physical devices that include random access memory. Volatile memory 604 is typically utilized by processing circuitry 602 to temporarily store information during processing of software instructions. It will be appreciated that volatile memory 604 typically does not continue to store instructions when power is cut to the volatile memory 604.

Aspects of processing circuitry 602, volatile memory 604, and non-volatile storage device 606 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 600 typically implemented in software by a processor to perform a particular function using portions of volatile memory, which function involves transformative processing that specially configures the processor to perform the function. Thus, a module, program, or engine may be instantiated via processing circuitry 602 executing instructions held by non-volatile storage device 606, using portions of volatile memory 604. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 608 may be used to present a visual representation of data held by non-volatile storage device 606. The visual representation may take the form of a graphical user interface (GUI). As the herein described methods and processes change the data held by the non-volatile storage device, and thus transform the state of the non-volatile storage device, the state of display subsystem 608 may likewise be transformed to visually represent changes in the underlying data. Display subsystem 608 may include one or more display devices utilizing virtually any type of technology. Such display devices may be combined with processing circuitry 602, volatile memory 604, and/or non-volatile storage device 606 in a shared enclosure, or such display devices may be peripheral display devices.

When included, input subsystem 610 may comprise or interface with one or more user-input devices such as a keyboard, mouse, touch screen, camera, or microphone.

When included, communication subsystem 612 may be configured to communicatively couple various computing devices described herein with each other, and with other devices. Communication subsystem 612 may include wired and/or wireless communication devices compatible with one or more different communication protocols. As non-limiting examples, the communication subsystem may be configured for communication via a wired or wireless local- or wide-area network, broadband cellular network, etc. In some embodiments, the communication subsystem may allow computing system 600 to send and/or receive messages to and/or from other devices via a network such as the Internet.

The following paragraphs provide additional support for the claims of the subject application. One aspect provides a memory management system for training an untrained transformer-based model using memory usage profiling, the memory management system comprising processing circuitry and memory storing instructions that, when executed, cause the processing circuitry to perform at least two deep learning memory usage profiling sessions, each using a different batch size, for training the untrained model, generate a first memory usage profile log during a first memory usage profiling session and a second memory usage profile log during a second memory usage profiling session, determine an optimal batch size based on the first memory usage profile log and the second memory usage profile log, generate a memory schedule in accordance with the optimal batch size, perform the deep learning model training session at the optimal batch size to train the untrained model, using a custom allocator to perform custom memory allocation in accordance with the memory schedule, and generate and output a trained model. In this aspect, additionally or alternatively, the optimal batch size may be determined by classifying memory objects identified in the first memory usage profile log and the second memory usage profile log as a same-size object or a proportional-size object, processing the classified memory objects to simulate memory usage for a plurality of candidate batch sizes, and determining a batch size among the plurality of candidate batch sizes, which maximizes memory usage without exceeding an available memory capacity, as the optimal batch size. In this aspect, additionally or alternatively, a given memory object may be classified as the same-size object when a size of the given memory object remains constant across the two deep learning memory usage profiling training sessions. In this aspect, additionally or alternatively, a given memory object may be classified as the proportional-size object when a size of the given memory object scales proportionally to a batch size across the two deep learning memory usage profiling training sessions. In this aspect, additionally or alternatively, memory allocation calls may be intercepted during the training session, it may be determined whether the intercepted call matches a classified memory object, responsive to determining that the intercepted call matches the classified memory object, the classified memory object may be mapped in a custom heap of a block map at an offset assignment indicated in the memory schedule. In this aspect, additionally or alternatively, it may be determined that the intercepted call matches the classified memory object when callsite information and a requested memory size of the intercepted call match the classified memory object. In this aspect, additionally or alternatively, the custom allocator may use a dependency checking function to determine whether a memory region that is assigned to the classified memory object overlaps with an active memory region of a memory object that is still active, and responsive to determining that a lifetime overlap exists, the custom allocator may wait until operations associated with the active memory region are completed before mapping the classified memory object in the custom heap of the block map. In this aspect, additionally or alternatively, the memory schedule may contain offset assignments for each classified memory object. In this aspect, additionally or alternatively, the classified memory objects may be processed to simulate memory usage for the plurality of candidate batch sizes by iterating through the plurality of candidate batch sizes, and for each iterated candidate batch size the classified memory objects may be sorted in a non-increasing order of size, the classified memory objects may be iterated through to assign offsets for each classified memory object, and a total memory usage may be calculated for the iterated candidate batch size. In this aspect, additionally or alternatively, the offset assignments may be given to the classified memory objects by recalculating a size of the proportional-size object as base size × candidate batch size/reference batch size.

Another aspect provides a memory management method for training an untrained transformer-based model using memory usage profiling, the memory management method comprising performing at least two deep learning memory usage profiling sessions, each using a different batch size, for training the untrained model, generating a first memory usage profile log during a first memory usage profiling session and a second memory usage profile log during a second memory usage profiling session, determining an optimal batch size based on the first memory usage profile log and the second memory usage profile log, generating a memory schedule in accordance with the optimal batch size, performing a deep learning model training session at the optimal batch size to train the untrained model, performing custom memory allocation in accordance with the memory schedule, and generating and outputting a trained model. In this aspect, additionally or alternatively, the optimal batch size may be determined by classifying memory objects identified in the first memory usage profile log and the second memory usage profile log as a same-size object or a proportional-size object, processing the classified memory objects to simulate memory usage for a plurality of candidate batch sizes, and determining a batch size among the plurality of candidate batch sizes, which maximizes memory usage without exceeding an available memory capacity, as the optimal batch size. In this aspect, additionally or alternatively, a given memory object may be classified as the same-size object when a size of the given memory object remains constant across the two deep learning memory usage profiling sessions. In this aspect, additionally or alternatively, a given memory object may be classified as the proportional-size object when a size of the given memory object scales proportionally to a batch size across the two deep learning memory usage profiling sessions. In this aspect, additionally or alternatively, memory allocation calls may be intercepted during the training session, it may be determined whether the intercepted call matches a classified memory object, responsive to determining that the intercepted call matches the classified memory object, the classified memory object may be mapped in a custom heap of a block map at an offset assignment indicated in the memory schedule. In this aspect, additionally or alternatively, it may be determined that the intercepted call matches the classified memory object when callsite information and a requested memory size of the intercepted call match the classified memory object. In this aspect, additionally or alternatively, the custom memory allocation may be performed using a dependency checking function to determine whether a memory region that is assigned to the classified memory object overlaps with an active memory region of a memory object that is still active, and responsive to determining that a lifetime overlap exists, the classified memory object may be mapped in the custom heap of the block map after operations associated with the active memory region are completed. In this aspect, additionally or alternatively, the memory schedule may contain offset assignments for each classified memory object. In this aspect, additionally or alternatively, the offset assignments may be given to the classified memory objects by recalculating a size of a proportional-size object as base size × candidate batch size/reference batch size.

Another aspect provides a computing system for optimizing a training of an untrained model, the computing system comprising processing circuitry and memory storing instructions that, when executed, cause the processing circuitry to perform at least two deep learning memory usage profiling sessions, each using a different batch size, for training the untrained model, intercept and log memory allocation calls during each memory usage profiling session to generate a first memory usage profile log during a first memory usage profiling session and a second memory usage profile log during a second memory usage profiling session, classify memory objects identified in the first memory usage profile log and the second memory usage profile log as a same-size object or a proportional-size object, process the classified memory objects to simulate memory usage for a plurality of candidate batch sizes, determine an optimal batch size among the plurality of candidate batch sizes which maximizes memory usage without exceeding an available memory capacity, perform a deep learning model training session at the optimal batch size to train the untrained model, and generate and output a trained model, wherein the optimal batch size is determined by iterating through the plurality of candidate batch sizes in a loop, assigning offsets to the classified memory objects and predicting a total memory usage for each candidate batch size, terminating the loop when the predicted total memory usage for the candidate batch size exceeds the available memory capacity to select a last feasible batch size among the plurality of candidate batch sizes as the optimal batch size.

"And/or" as used herein is defined as the inclusive or ∨, as specified by the following truth table:

| | | |
|---|---|---|
| A | B | A ∨ B |
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A memory management system for training an untrained transformer-based model using memory usage profiling, the memory management system comprising:
processing circuitry and memory storing instructions that, when executed, cause the processing circuitry to:
perform (202) at least two deep learning memory usage profiling sessions, each using a different batch size, for training the untrained model;
generate (204) a first memory usage profile log during a first memory usage profiling session and a second memory usage profile log during a second memory usage profiling session;
determine (206) an optimal batch size based on the first memory usage profile log and the second memory usage profile log;
generate (208) a memory schedule in accordance with the optimal batch size;
perform (210) the deep learning model training session at the optimal batch size to train the untrained model, using a custom allocator to perform custom memory allocation in accordance with the memory schedule; and
generate and output (212) a trained model.

2. The memory management system of claim 1, wherein the optimal batch size is determined by:
classifying memory objects identified in the first memory usage profile log and the second memory usage profile log as a same-size object or a proportional-size object;
processing the classified memory objects to simulate memory usage for a plurality of candidate batch sizes; and
determining a batch size among the plurality of candidate batch sizes, which maximizes memory usage without exceeding an available memory capacity, as the optimal batch size.

3. The memory management system of claim 2, wherein a given memory object is classified as the same-size object when a size of the given memory object remains constant across the two deep learning memory usage profiling training sessions.

4. The memory management system of claim 2, wherein a given memory object is classified as the proportional-size object when a size of the given memory object scales proportionally to a batch size across the two deep learning memory usage profiling training sessions.

5. The memory management system of claim 2, wherein
memory allocation calls are intercepted during the training session;
it is determined whether the intercepted call matches a classified memory object;
responsive to determining that the intercepted call matches the classified memory object, the classified memory object is mapped in a custom heap of a block map at an offset assignment indicated in the memory schedule.

6. The memory management system of claim 5, wherein it is determined that the intercepted call matches the classified memory object when callsite information and a requested memory size of the intercepted call match the classified memory object.

7. The memory management system of claim 5, wherein
the custom allocator uses a dependency checking function to determine whether a memory region that is assigned to the classified memory object overlaps with an active memory region of a memory object that is still active; and
responsive to determining that a lifetime overlap exists, the custom allocator waits until operations associated with the active memory region are completed before mapping the classified memory object in the custom heap of the block map.

8. The memory management system of claim 2, wherein the memory schedule contains offset assignments for each classified memory object.

9. The memory management system of claim 2, wherein
the classified memory objects are processed to simulate memory usage for the plurality of candidate batch sizes by iterating through the plurality of candidate batch sizes, and for each iterated candidate batch size:
the classified memory objects are sorted in a non-increasing order of size;
the classified memory objects are iterated through to assign offsets for each classified memory object; and
a total memory usage is calculated for the iterated candidate batch size.

10. The memory management system of claim 9, wherein the offset assignments are given to the classified memory objects by recalculating a size of the proportional-size object as base size × candidate batch size/reference batch size.

11. A memory management method (200) for training an untrained transformer-based model using memory usage profiling, the memory management method comprising:
performing (202) at least two deep learning memory usage profiling sessions, each using a different batch size, for training the untrained model;
generating (204) a first memory usage profile log during a first memory usage profiling session and a second memory usage profile log during a second memory usage profiling session;
determining (206) an optimal batch size based on the first memory usage profile log and the second memory usage profile log;
generating (208) a memory schedule in accordance with the optimal batch size;
performing (210) a deep learning model training session at the optimal batch size to train the untrained model, performing custom memory allocation in accordance with the memory schedule; and
generating and outputting (212) a trained model.

12. The memory management method of claim **11,** wherein the optimal batch size is determined by:
classifying memory objects identified in the first memory usage profile log and the second memory usage profile log as a same-size object or a proportional-size object;
processing the classified memory objects to simulate memory usage for a plurality of candidate batch sizes; and
determining a batch size among the plurality of candidate batch sizes, which maximizes memory usage without exceeding an available memory capacity, as the optimal batch size.

13. The memory management method of claim 12, wherein a given memory object is classified as the same-size object when a size of the given memory object remains constant across the two deep learning memory usage profiling sessions.

14. The memory management method of claim 12, wherein a given memory object is classified as the proportional-size object when a size of the given memory object scales proportionally to a batch size across the two deep learning memory usage profiling sessions,
optionally, wherein
memory allocation calls are intercepted during the training session;
it is determined whether the intercepted call matches a classified memory object;
responsive to determining that the intercepted call matches the classified memory object, the classified memory object is mapped in a custom heap of a block map at an offset assignment indicated in the memory schedule,
optionally, wherein it is determined that the intercepted call matches the classified memory object when callsite information and a requested memory size of the intercepted call match the classified memory object
optionally, wherein the custom memory allocation is performed using a dependency checking function to determine whether a memory region that is assigned to the classified memory object overlaps with an active memory region of a memory object that is still active; and
responsive to determining that a lifetime overlap exists, the classified memory object is mapped in the custom heap of the block map after operations associated with the active memory region are completed,
optionally, wherein the memory schedule contains offset assignments for each classified memory object,
optionally, wherein the offset assignments are given to the classified memory objects by recalculating a size of a proportional-size object as base size × candidate batch size/reference batch size.

15. A computing system for optimizing a training of an untrained model, the computing system comprising:
processing circuitry and memory storing instructions that, when executed, cause the processing circuitry to:
perform at least two deep learning memory usage profiling sessions, each using a different batch size, for training the untrained model;
intercept and log (304) memory allocation calls during each memory usage profiling session to generate a first memory usage profile log during a first memory usage profiling session and a second memory usage profile log during a second memory usage profiling session;
classify (306) memory objects identified in the first memory usage profile log and the second memory usage profile log as a same-size object or a proportional-size object;
process (308) the classified memory objects to simulate memory usage for a plurality of candidate batch sizes;
determine (310) an optimal batch size among the plurality of candidate batch sizes which maximizes memory usage without exceeding an available memory capacity;
perform a deep learning model training session at the optimal batch size to train the untrained model; and
generate and output a trained model, wherein
the optimal batch size is determined by iterating through the plurality of candidate batch sizes in a loop, assigning offsets to the classified memory objects and predicting a total memory usage for each candidate batch size, terminating the loop when the predicted total memory usage for the candidate batch size exceeds the available memory capacity to select a last feasible batch size among the plurality of candidate batch sizes as the optimal batch size.
